# FASCICULE DE BREVET EUROPEEN

(11) **EP 4 452 822 B1**
(45) Date de publication et mention de la délivrance du brevet: **26.11.2025**
(21) Numéro de dépôt: 22808758.1
(22) Date de dépôt: 21.10.2022
(51) Int. Cl.: B66F 9/065, B66F 9/075, B66F 9/22

(54) **MACHINE DE MANUTENTION COMPORTANT UN BRAS DE LEVAGE ÉQUIPÉ D'UN OUTIL ARTICULÉ ET PROCÉDÉ DE COMMANDE D'UNE TELLE MACHINE DE MANUTENTION**
HANDHABUNGSMASCHINE MIT EINEM HUBARM MIT GELENKWERKZEUG UND VERFAHREN ZUR STEUERUNG EINER DERARTIGEN HANDHABUNGSMASCHINE
HANDLING MACHINE COMPRISING A LIFTING ARM PROVIDED WITH AN ARTICULATED TOOL, AND METHOD FOR CONTROLLING SUCH A HANDLING MACHINE

(30) Priorité: 20.12.2021 FR 2113947
(43) Date de publication de la demande: 30.10.2024
(73) Titulaire: MANITOU BF, 44150 Ancenis (FR)
(72) Inventeur: DERVAL, Laurent, 44150 Ancenis (FR)
(74) Mandataire: Loyer & Abello
(86) Numéro de dépôt international: PCT/EP2022/079473
(87) Numéro de publication internationale: WO 2023/117177

(56) Documents cités:
- EP-A1- 3 702 312
- WO-A1-2020/229291
- WO-A1-2021/170929

## Description

### Domaine technique

L'invention se rapporte au domaine des machines de manutention comportant un bras de levage.

L'invention concerne plus particulièrement une machine de manutention comportant un bras de levage monté pivotant sur le châssis de la machine de manutention et un outil, tel qu'un godet ou une fourche par exemple, qui est monté articulé sur le bras de levage.

### Arrière-plan technologique

Le document WO2021170929 divulgue une machine de manutention comportant un bras de levage qui est monté à pivotement sur le châssis autour d'un axe horizontal. La machine de manutention comporte, en outre, un outil destiné à recevoir une charge, tel qu'un godet ou une fourche, qui peut être monté articulé sur le bras de levage. La machine de manutention comporte un capteur qui est configuré pour délivrer un signal de mesure représentatif d'une position du bras de levage et un vérin de levage qui est couplé, d'une part, au châssis et, d'autre part, au bras de levage et qui permet ainsi de faire pivoter le bras de levage autour de son axe de pivotement. Un vérin d'inclinaison, hydraulique, est disposé entre le bras de levage et l'outil et permet de déplacer l'outil par rapport au bras de levage. Le vérin d'inclinaison est en communication fluidique avec un vérin de compensation qui est actionné en fonction du déplacement du bras de levage par rapport au châssis. Le vérin de compensation et le vérin d'inclinaison fonctionnent respectivement en maître et esclave de manière à maintenir l'horizontalité de l'accessoire au cours de l'élévation du bras de levage.

Une telle machine de manutention n'est pas pleinement satisfaisante. En effet, le vérin de compensation est lourd, encombrant et son montage complexifie les opérations de fabrication de la machine. De plus, le vérin de compensation génère des contraintes mécaniques sur le bras de levage et sur le châssis.

### Résumé

Une idée à la base de l'invention consiste à proposer une machine de manutention du type précité, c'est-à-dire comportant un bras de levage monté pivotant sur le châssis de la machine de manutention et un outil monté articulé sur le bras de levage, équipée de moyens de compensation qui permettent de maintenir l'inclinaison de l'outil par rapport au châssis constant ou sensiblement constant pendant l'élévation du bras de levage et qui soient plus simples, plus légers et moins encombrants.

Une idée à la base de l'invention consiste à proposer une telle machine de manutention qui soit dépourvue de vérin de compensation pour commander le vérin d'inclinaison déplaçant l'outil par rapport au bras de levage.

Une idée à la base de l'invention consiste également à proposer un procédé de commande d'une telle machine de manutention.

Selon un premier aspect, l'invention propose un procédé de commande d'une machine de manutention comportant un châssis, un bras de levage monté pivotant sur le châssis autour d'au moins un axe X1 entre une position abaissée et une position relevée, un vérin de levage agencé pour faire pivoter le bras de levage autour dudit axe X1 entre la position abaissée et la position relevée, un premier capteur qui est configuré pour délivrer un signal de mesure S1 représentatif d'une position du bras de levage entre la position abaissée et la position relevée, un outil destiné à recevoir une charge et monté pivotant sur le bras de levage autour d'au moins un axe X4, parallèle à X1, un vérin d'inclinaison présentant une course L_{incl} et agencé pour faire pivoter l'outil autour dudit axe X4, un deuxième capteur qui est configuré pour délivrer un signal de mesure S2 relatif à la course L_{incl} du vérin d'inclinaison, au moins un organe d'actionnement qui est configuré pour délivrer des demandes Dₗₑᵥ d'actionnement du vérin de levage et des demandes D_{incl} d'actionnement du vérin d'inclinaison, le procédé comportant les étapes suivantes :
- recevoir une demande D_{incl} d'actionnement du vérin d'inclinaison ;
- en réponse à la réception d'une demande D_{incl} d'actionnement du vérin d'inclinaison, activer un mode d'actionnement manuel du vérin d'inclinaison, ledit mode d'actionnement manuel du vérin d'inclinaison comprenant générer une consigne L_{c} relative à la course du vérin d'inclinaison en fonction de ladite demande D_{incl} d'actionnement du vérin d'inclinaison et asservir la course L_{incl} du vérin d'inclinaison, en boucle fermée, en fonction de ladite consigne L_{c} relative à la course du vérin d'inclinaison et du signal de mesure S2 relatif à la course L_{incl} du vérin d'inclinaison ;
- recevoir une demande Dₗₑᵥ d'actionnement du vérin de levage ; et
- en réponse à la réception d'une demande d'actionnement du vérin de levage, activer un mode compensation, le mode compensation comportant les étapes de générer une consigne L_{c} relative à la course du vérin d'inclinaison en fonction d'une variation du signal de mesure S1 représentatif de la position Pₗₑᵥ du bras de levage au cours du temps et d'asservir la course L_{incl} du vérin d'inclinaison, en boucle fermée, en fonction de ladite consigne L_{c} relative à la course du vérin d'inclinaison et du signal de mesure S2 relatif à la course L_{incl} du vérin d'inclinaison.

Ainsi, un tel procédé permet de contrôler électroniquement le vérin d'inclinaison de manière à ce qu'il compense le mouvement de montée ou de descente du bras de levage sans utiliser de vérin de compensation, encombrant, lourd et susceptible de générer des contraintes mécaniques sur le bras de levage et sur le châssis.

Selon des modes de réalisation, une telle machine de manutention peut présenter une ou plusieurs des caractéristiques suivantes.

Selon un mode de réalisation, en réponse à la réception d'une demande d'actionnement du vérin de levage, le procédé génère une consigne de déplacement du vérin de levage en fonction de la demande Dₗₑᵥ et pilote le vérin de levage en fonction de la consigne ainsi générée.

Selon un mode de réalisation, l'outil est un godet ou une fourche.

Selon un mode de réalisation, le mode compensation comporte, pour chaque période T successive, déterminer une variation d'angle Δα correspondant au débattement angulaire du bras de levage autour de l'axe X1 au cours de la période T, en fonction de deux signaux de mesure S1 relatifs à la position Pₗₑᵥ du bras de levage délivrés respectivement au début et à la fin de la période T et, lors de la période suivante, la consigne L_{c} relative à la course du vérin d'inclinaison est générée en fonction de la variation d'angle Δα correspondant à la période précédente et la course L_{incl} du vérin d'inclinaison est asservie en fonction de ladite consigne L_{c}.

Selon un mode de réalisation, le signal de mesure S1 délivré par le premier capteur est relatif à un angle α d'inclinaison du bras de levage par rapport à un axe de référence dans un plan orthogonal à l'axe X1.

Selon un mode de réalisation, le procédé de commande comporte attribuer à une variable L₀, chaque nouvelle consigne L_{c} relative à la course du vérin d'inclinaison générée et, en mode compensation, la consigne L_{c} relative à la course du vérin d'inclinaison est générée en fonction de la variation d'angle Δα et de L₀. Ceci permet d'éviter ou tout du moins de limiter les erreurs cumulatives liées à l'asservissement de la longueur du vérin d'inclinaison.

Selon un mode de réalisation, en mode compensation, la consigne L_{c} relative à la course du vérin d'inclinaison est générée en fonction de la variation d'angle Δα et de L ₀ de manière à ce qu'une variation d'angle Δβ correspondant au débattement angulaire de l'outil autour de l'axe X4 pour un déplacement de la course du vérin entre L₀ et Lc soit de même valeur et de signe opposé à la variation d'angle Δα*.*

Selon un mode de réalisation, la course L_{incl} du vérin d'inclinaison est asservie au moyen d'un contrôleur PID.

Selon un mode de réalisation, le mode compensation est désactivé en réponse à la réception d'une demande D_{incl} d'actionnement du vérin d'inclinaison.

Selon un mode de réalisation, l'on compare le signal de mesure S2 relatif à la course L_{incl} du vérin d'inclinaison à un longueur seuil Lₘᵢₙ et à une longueur seuil Lₘₐₓ correspondant respectivement à une position complètement rétractée et à une position complètement déployée du vérin d'inclinaison et l'on désactive, le mode compensation, lorsque la course L_{incl} du vérin d'inclinaison est égale à l'une des longueurs seuils Lₘᵢₙ et Lₘₐₓ.

Selon un mode de réalisation, l'on génère un signal d'alerte lorsque le mode compensation est désactivé.

Selon un mode de réalisation, en mode compensation, l'on compare le signal de mesure S2 relatif à la course L_{incl} du vérin d'inclinaison à un première valeur seuil L₁ et à une deuxième valeur seuil L₂, la première valeur seuil L₁étant supérieure à une longueur seuil Lₘᵢₙ correspondant à une position complètement rétractée du vérin d'inclinaison, la deuxième valeur seuil L₂ étant supérieure à la première valeur seuil L₁ et inférieure à une longueur seuil Lₘₐₓ correspondant à une position complètement déployée du vérin d'inclinaison, et on limite la vitesse angulaire de pivotement du bras de levage autour de l'axe X4 lorsque la course L_{incl} du vérin d'inclinaison est inférieure à la première valeur seuil L₁ou supérieure à la deuxième valeur seuil L₂.

Selon un deuxième aspect, l'invention propose également une machine de manutention comportant un châssis, un bras de levage monté pivotant sur le châssis autour d'au moins un axe X1 entre une position abaissée et une position relevée, un vérin de levage agencé pour faire pivoter le bras de levage autour dudit axe X1 entre la position abaissée et la position relevée, un premier capteur qui est configuré pour délivrer un signal de mesure S1 représentatif d'une position du bras de levage entre la position abaissée et la position relevée, un outil destiné à recevoir une charge et monté pivotant sur le bras de levage autour d'au moins un axe X4, parallèle à X1, un vérin d'inclinaison présentant une course L_{incl} et agencé pour faire pivoter l'outil autour dudit axe X4, un deuxième capteur qui est configuré pour délivrer un signal de mesure S2 relatif à la course L_{incl} du vérin d'inclinaison, au moins un organe d'actionnement qui est configuré pour délivrer des demandes Dₗₑᵥ d'actionnement du vérin de levage et des demandes D_{incl} d'actionnement du vérin d'inclinaison et
une unité de commande qui est configurée pour :
- recevoir les signaux de mesure S1 et S2, les demande Dₗₑᵥ et les demande D_{incl} ;
- en réponse à la réception d'une demande D_{incl} d'actionnement du vérin d'inclinaison, activer un mode d'actionnement manuel du vérin d'inclinaison, ledit mode d'actionnement manuel du vérin d'inclinaison comprenant générer une consigne L_{c} relative à la course du vérin d'inclinaison en fonction de ladite demande D_{incl} d'actionnement du vérin d'inclinaison et asservir la course L_{incl} du vérin d'inclinaison, en boucle fermée, en fonction de ladite consigne L_{c} relative à la course du vérin d'inclinaison et du signal de mesure S2 relatif à la course L_{incl} du vérin d'inclinaison ; et
- en réponse à la réception d'une demande d'actionnement Dₗₑᵥ du vérin de levage, activer un mode compensation, le mode compensation comportant les étapes de générer une consigne L_{c} relative à la course du vérin d'inclinaison en fonction d'une variation du signal de mesure S1 représentatif de la position du bras de levage et d'asservir la course L_{incl} du vérin d'inclinaison, en boucle fermée, en fonction de ladite consigne L_{c} relative à la course du vérin d'inclinaison et du signal de mesure S2 relatif à la course L_{incl} du vérin d'inclinaison.

Selon un mode de réalisation, la machine de manutention comporte un circuit hydraulique de commande qui est configuré pour assurer la commande du vérin de levage et du vérin d'inclinaison et l'unité de commande est configurée pour contrôler le circuit hydraulique de commande.

Selon un mode de réalisation, le circuit hydraulique de commande comporte un réservoir, une pompe ainsi qu'un distributeur à partage de débits qui est configuré pour mettre en communication sélectivement le fluide hydraulique provenant de la pompe avec le vérin de levage et/ou le vérin d'inclinaison.

Selon un mode de réalisation, l'unité de commande est configurée de sorte que, en mode compensation :
- pour chaque période T successive, déterminer une variation d'angle Δα correspondant au débattement angulaire du bras de levage autour de l'axe X1 au cours de la période T, en fonction de deux signaux de mesure S1 relatifs à la position Pₗₑᵥ du bras de levage délivrés respectivement au début et à la fin de la période T ; et
- lors de la période suivante, générer la consigne L_{c} relative à la course du vérin d'inclinaison en fonction de la variation d'angle Δα correspondant à la période précédente et asservir la course L_{incl} du vérin d'inclinaison en fonction de ladite consigne L_{c}.

Selon un mode de réalisation, l'unité de commande est configurée pour :
- attribuer à une variable L₀, chaque nouvelle consigne L_{c} relative à la course du vérin d'inclinaison générée et pour
- en mode compensation, générer la consigne L_{c} relative à la course du vérin d'inclinaison en fonction de la variation d'angle Δα et de L₀.

### Breve description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[Fig.1] La [Fig.1] est une représentation schématique d'une machine de manutention sous la forme d'un chariot élévateur.
[Fig.2] La [Fig.2] est une représentation schématique du bras de levage ainsi que du circuit hydraulique de commande, de l'unité de commande et de l'organe d'actionnement du bras de levage, ledit bras de levage étant représenté dans trois positions différentes.
[Fig.3] La [Fig.3] présente sous forme de logigramme le procédé de commande du vérin d'inclinaison.

### Description des modes de réalisation

Par convention, la direction « longitudinale » de la machine de manutention correspond à l'orientation avant-arrière de la machine. Par ailleurs, la direction « transversale » est orientée perpendiculairement à la direction longitudinale. En outre, les directions « verticale » et « horizontale » sont définies par référence à une machine de manutention positionnée sur un plan parfaitement horizontal.

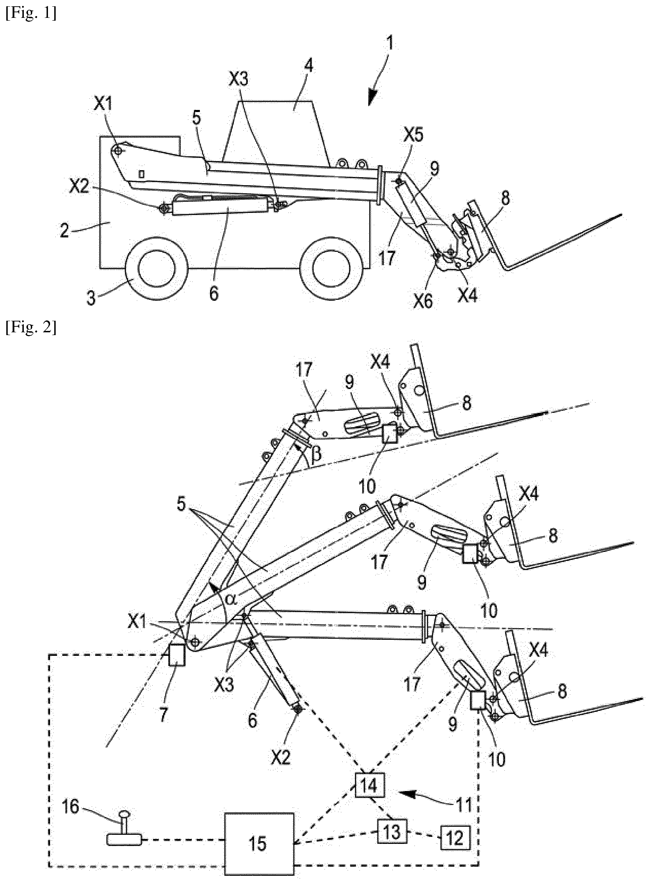

En référence à la [Fig.1], on décrit une machine de manutention 1. La machine de manutention 1 comporte un châssis 2, mobile. Pour ce faire, la machine de manutention 1 comporte des roues 3 ou des chenilles ainsi qu'un groupe motopropulseur, non représenté. Le groupe motopropulseur comprend un moteur thermique ou électrique ainsi qu'un dispositif de transmission qui accouple ledit moteur aux roues 3 ou aux chenilles, ce qui permet de déplacer la machine de manutention 1.

La machine de manutention 1 comporte également une cabine de conduite 4 qui est portée par le châssis 2. La cabine de conduite 4 est équipée d'un poste de conduite comprenant un siège sur lequel le conducteur peut prendre place pour la conduite du chariot élévateur. Le poste de conduite comporte également des équipements de commande de la machine de manutention 1, tels qu'un volant de direction, une pédale d'accélération, une pédale de frein. Le poste de conduite est également équipé d'un ou de plusieurs organes d'actionnement qui permettent de commander le déplacement d'un bras de levage 5 et d'un outil 4 qui y est articulé et qui seront décrits de manière plus détaillée par la suite.

Le bras de levage 5 est monté pivotant sur le châssis 2 autour d'un axe X1 qui est, de préférence, orienté horizontalement et transversalement. Ainsi, le bras de levage 5 est monté mobile dans un plan vertical parallèle à la direction longitudinale de la machine de manutention 1 entre une position abaissée, illustrée sur la [Fig.1], et une position relevée.

Selon un mode de réalisation, le bras de levage 5 est télescopique, c'est-dire que sa longueur est variable. Pour ce faire, le bras de levage 5 comporte au moins deux parties dont l'une coulisse à l'intérieur de l'autre et un vérin de télescopage, non illustré, qui comporte une première et une deuxième extrémités respectivement fixées à la première et à la deuxième partie du bras de levage 5. Dans ce cas, la machine de manutention 1 peut notamment être un chariot télescopique. Selon un autre mode de réalisation, le bras de levage 5 est un bras de longueur fixe.

La machine de manutention 1 comporte également un vérin de levage 6 qui comporte une première extrémité qui est monté articulée sur le châssis 2 de la machine de manutention 1 autour d'un axe d'articulation X2, parallèle à l'axe X1, et une deuxième extrémité qui est montée articulée sur le bras de levage 5 autour d'un axe d'articulation X3, également parallèle à X1.

Ainsi, comme illustré sur la [Fig.2], le vérin de levage 6 permet de faire varier l'angle α formé, dans le plan de débattement du bras de levage 5, entre l'axe longitudinal du bras de levage 5 et un axe de référence. Par ailleurs, la machine de manutention 1 comporte un capteur 7 qui est configuré pour délivrer un signal de mesure S1 représentatif de la position Pₗₑᵥ du bras de levage 5 entre la position abaissée et la position relevée. Selon un mode de réalisation, un tel capteur 7 est un capteur d'angle à effet hall. Selon un autre mode de réalisation, le capteur 7 est un capteur de course et le signal de mesure S1 délivré par le capteur 7 est relatif à la course Lₗₑᵥ du vérin de levage 6.

Par ailleurs, le bras de levage 5 est également équipé d'un outil 8, tel qu'un godet ou une fourche, qui est destiné à recevoir une charge. L'outil 8 est monté articulé à l'extrémité distale du bras de levage 5. L'outil 8 est monté pivotant par rapport au bras de levage 5 autour d'au moins un axe d'articulation X4 parallèle à X1. Dans le mode de réalisation représenté, l'extrémité distale du bras de levage 5 comporte une portion coudée 17 de manière à ce que l'axe d'articulation X4 de l'outil 8 se situe en-dessous de l'axe longitudinal du bras de levage 5. Cette portion coudée 17 permet notamment à l'outil 8 d'être positionné au niveau du sol bien que l'axe longitudinal du bras de levage 5 soit à distance du sol lorsque ledit bras de levage 45 est en position abaissée.

La machine de manutention 1 comporte également un vérin d'inclinaison 9 qui est configuré pour faire pivoter l'outil 8 autour de l'axe d'articulation X4. Pour ce faire, dans le mode de réalisation représenté, le vérin d'inclinaison 9 présente une première extrémité montée articulée sur le bras de levage 5 autour d'un axe X5 parallèle à X1 et une deuxième extrémité monté articulée sur l'outil 8 autour d'un axe X6 également parallèle à X1. Le vérin d'inclinaison 9 permet ainsi de faire varier l'angle β formé entre l'axe longitudinal du bras de levage 5 et un axe de référence de l'outil 8. Le vérin d'inclinaison 9 est équipé d'un capteur 10 qui est configuré pour délivrer un signal de mesure S2 relatif à la course L_{incl} du vérin d'inclinaison 9.

Comme représenté sur la [Fig.2], la machine de manutention 1 comporte un circuit hydraulique de commande 11 qui est configuré pour assurer la commande du vérin de levage 6 et du vérin d'inclinaison 9. Le circuit hydraulique de commande 11 comporte notamment un réservoir 12, une pompe 13 ainsi qu'un distributeur à partage de débits 14. Le distributeur à partage de débits 14 est configuré pour mettre en communication le fluide hydraulique provenant de la pompe 13 avec le vérin de levage 6, avec le vérin d'inclinaison 9 ou simultanément avec le vérin de levage 6 et le vérin d'inclinaison 9.

Par ailleurs, la machine de manutention 1 comporte une unité de commande 15 qui est configurée pour contrôler le circuit hydraulique de commande 11 et commander ainsi, d'une part, le vérin de levage 6 afin de déplacer le bras de levage 5 par rapport au châssis 2 de la machine de manutention 1 et, d'autre part, le vérin d'inclinaison 9 de manière à déplacer l'outil 8 par rapport au bras de levage 5.

La machine de manutention 1 comporte également au moins un organe d'actionnement 16 qui est actionnable par un opérateur, est relié à l'unité de commande 15 et est configuré pour délivrer à l'unité de commande 15 des demandes D ₗₑᵥ d'actionnement du vérin de levage 6 et des demandes D_{incl} d'actionnement du vérin d'inclinaison 9. Dans le mode de réalisation représenté, la machine de manutention 1 comporte un seul organe d'actionnement 16 qui est configuré pour délivrer à la fois les demandes Dₗₑᵥ d'actionnement du vérin de levage 6 et celles D_{incl} du vérin d'inclinaison 9. Il s'agit par exemple d'un joystick deux axes dont l'un des axes est dédié à la commande du vérin de levage 6 et dont l'autre est dédié à la commande du vérin d'inclinaison 9. Selon un autre mode de réalisation, la machine de manutention 1 comporte deux organes d'actionnement qui sont respectivement dédiés à la commande du vérin de levage 6 et à la commande du vérin d'inclinaison 9.

Par ailleurs, les capteurs 7, 10 sont également reliés à l'unité de commande 15 afin de lui fournir le signal de mesure S1 représentatif de la position Pₗₑᵥ du bras de levage 5 entre la position abaissée et la position relevée et le signal de mesure S2 relatif à la course L_{incl}du vérin d'inclinaison 9.

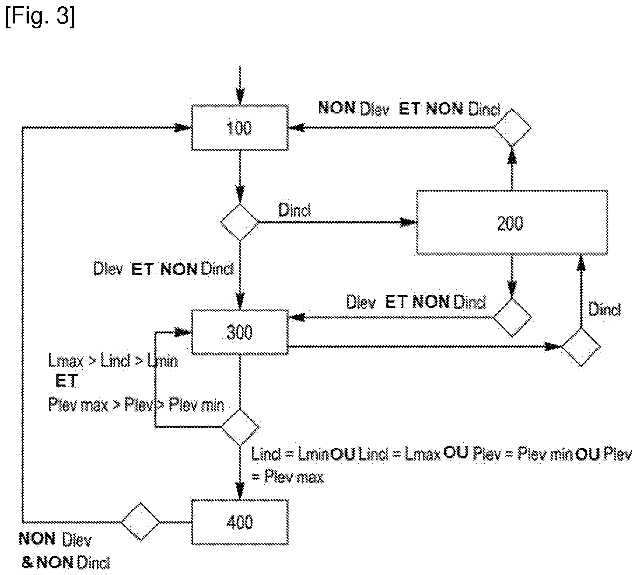

En relation avec le logigramme de la [Fig.3], on décrit un procédé de commande du vérin d'inclinaison 9, notamment en vue de mettre en œuvre une mode compensation visant à maintenir une inclinaison de l'outil 8 par rapport au châssis 2 constant (ou tout du moins sensiblement constant) lors d'un déplacement du bras de levage 5.

L'étape référencée 100 correspond à un état statique du bras de levage 5 par rapport au châssis 2 et à un état statique de l'outil 8 par rapport au bras de levage 5, ce qui signifie qu'aucune demande Dₗₑᵥ d'actionnement du vérin de levage 6 et aucune demande D_{incl} d'actionnement du vérin d'inclinaison 9 n'est transmise à l'unité de commande 15. Dans cet état, la fonction de compensation est à l'état désactivé. En outre, l'unité de commande 15 dispose, en mémoire, d'une valeur L₀qui correspond à la dernière valeur de consigne Lc relative à la course du vérin d'inclinaison 9 généré par l'unité de commande 10. Le procédé reste à cette étape tant qu'aucune demande D ₗₑᵥ d'actionnement du vérin de levage 6 ou D_{incl} d'actionnement du vérin d'inclinaison 9 n'est émise.

Si une demande D_{incl} d'actionnement du vérin d'inclinaison 9 est transmise par l'organe d'actionnement 16 à l'unité de commande 15 seule ou en combinaison avec une demande Dₗₑᵥ d'actionnement du vérin de levage 6, le procédé active un mode d'actionnement manuel du vérin d'inclinaison 9 qui correspond à l'étape référencée 200. L'unité de commande 15 génère, en fonction de la demande D_{incl} d'actionnement du vérin d'inclinaison 9, une consigne L_{c} relative à la course du vérin d'inclinaison 9. L'unité de commande 15 asservit alors, en boucle fermée, la course du vérin d'inclinaison 9 en fonction de ladite consigne L_{c} relative à la course du vérin d'inclinaison 9 et du signal de mesure S2 relatif à la course L_{incl} du vérin d'inclinaison 9 délivré par le capteur 10. Le mode compensation, décrit par la suite, est à l'état désactivé et la valeur de consigne Lc est enregistrée comme valeur L₀ dans la mémoire de l'unité de commande 15. Si plus aucune demande d'actionnement du vérin de levage 6 ou du vérin d'inclinaison 9 n'est émise par l'organe d'actionnement 16 à l'unité de commande 15, le procédé retourne à l'étape 100 correspondant à l'état statique du bras de levage 5 et de l'outil 8.

Si, à l'étape 100, une demande Dₗₑᵥ d'actionnement du vérin de levage 6 est transmise à l'unité de commande 15, sans qu'une demande D_{incl} d'actionnement du vérin d'inclinaison 9 ne soit transmise, le mode compensation est activé (Etape 300). L'unité de commande 15 génère alors une consigne de déplacement du vérin de levage 6 en fonction de la demande Dₗₑᵥ et pilote le vérin de levage 6 en fonction de la consigne ainsi générée.

Par ailleurs, lorsque le mode compensation est actif, l'unité de commande 15 calcule périodiquement la différence ΔS1 entre les deux signaux des mesure S1 relatifs à la position Pₗₑᵥ du bras de levage 5 respectivement délivrés, par le capteur 7, à la fin et au début de la période T considérée. Ainsi, dans le mode de réalisation dans lequel le signal de mesure S1 délivré par le capteur 7 est relatif à l'angle d'inclinaison α du bras de levage 5, l'unité de commande 15 détermine la variation d'angle Δα correspondant au débattement du bras de levage 5 autour de l'axe X1 au cours de la période T considérée. Dans l'autre mode de réalisation dans lequel le signal de mesure S1 est relatif à la course Lₗₑᵥ du vérin de levage 6, l'unité de commande 15 détermine la variation d'angle Δα en fonction de la course du vérin de levage 6 à la fin de la période T considérée et de la course du vérin de levage 6 au début de la période T considérée.

L'unité de commande 15 détermine alors, lors de la période T suivante, une nouvelle consigne Lc relative à longueur du vérin d'inclinaison 9 en fonction de la variation d'angle Δα et de la longueur L₀ qui correspond à la valeur de consigne Lc relative à la longueur du vérin d'inclinaison 9, en mémoire, pendant la période T considérée. La valeur L₀est alors mise à jour avec la nouvelle valeur de consigne Lc relative à la longueur du vérin d'inclinaison 9. La consigne Lc est, par exemple, déterminée au moyen d'une équation Lc = f (Δα, L₀) ou d'une table de corrélation qui donne pour chaque couple L₀, Δα, une valeur de consigne Lc correspondante. L'équation ou la table de corrélation sont telles que la variation d'angle Δβ correspondant au débattement de l'outil 8 autour de l'axe X4 pour un déplacement de la course du vérin entre L₀ et Lc soit opposé à la variation d'angle Δα, c'est-à-dire ait la même valeur absolue mais un sens opposé.

L'unité de commande 15 asservit alors, en boucle fermée, la course du vérin d'inclinaison 9 en fonction de ladite consigne L_{c} relative à la course du vérin d'inclinaison 9 et du signal de mesure S2 relatif à la course L_{incl} du vérin d'inclinaison 9 délivré par le capteur 10. Selon un mode de réalisation avantageux, l'asservissement est, par exemple, réalisé au moyen d'un correcteur PID.

Afin de minimiser le temps de latence, la période T considéré est inférieure à 100 ms. La période T est avantageusement supérieure à 10ms et est, par exemple, de l'ordre de 50 ms.

Par ailleurs, si une demande D_{incl} d'actionnement du vérin d'inclinaison 9 est transmise par l'organe d'actionnement 16 à l'unité de commande 15 alors que le mode de compensation est activé, le procédé active le mode d'actionnement manuel du vérin d'inclinaison 9 qui correspond à l'étape référencée 200 et qui a été décrit précédemment et désactive ainsi le mode compensation.

En outre, si à l'étape 200, une demande Dₗₑᵥ d'actionnement du vérin de levage 6 est transmise à l'unité de commande 15, sans que plus aucune demande D_{incl} d'actionnement du vérin d'inclinaison 9 ne soit transmise, le procédé retourne à l'étape référencée 300 dans laquelle le mode de compensation est à l'état activé.

Par ailleurs, lors de l'étape 300, l'unité de commande 15 détermine si le vérin d'inclinaison 9 a atteint l'une de ses deux positions de butée. Pour ce faire, l'unité de commande 15 compare la course L_{incl} du vérin d'inclinaison 9 déterminée à partir du signal de mesure S2 à une longueur seuil Lₘᵢₙ et à une longueur seuil Lₘₐₓ et détermine que la tige du vérin d'inclinaison 9 a atteint sa position complètement rétractée si L_{incl} = Lₘᵢₙ et que la tige du vérin a atteint sa position complètement déployée si L_{incl} = Lₘₐₓ.

Selon un mode de réalisation, lors de l'étape 300, l'unité de commande 15 peut également déterminer si le vérin de levage 6 a atteint l'une de ses deux positions de butée. Pour ce faire, l'unité de commande 15 compare le signal de mesure S1 relatif à la position Pₗₑᵥ du bras de levage 5 à deux seuils Pₗₑᵥₘᵢₙ et Pₗₑᵥₘₐₓ et détermine que la tige de vérin de levage 6 a atteint sa position complètement rétractée si Pₗₑᵥ = Pₗₑᵥₘᵢₙ et atteint sa position complètement déployée si Pₗₑᵥ = Pₗₑᵥₘₐₓ.

Lorsque l'unité de commande 15 détermine que le vérin d'inclinaison 9 ou que le vérin de levage 5 a atteint l'une de ses deux positions de butée, le mode compensation est inactivé (étape référencée 400).

Lors de cette étape 400, le procédé de commande retourne à l'étape 100 si plus aucune demande d'actionnement du vérin de levage 6 ou du vérin d'inclinaison 9 n'est émise par l'organe d'actionnement 16 à l'unité de commande 15.

Selon un mode de réalisation, lorsque la compensation est désactivée, un signal d'alerte est transmis à l'opérateur. Le signal d'alerte est, par exemple, un message qui est affiché sur le tableau de bord de la machine de manutention 1.

Par ailleurs, selon un mode de réalisation avantageux, lorsque la fonction de compensation est à l'état activé, l'unité de commande 15 détecte si le vérin de levage 6 approche l'une de ses deux positions de butée. Pour ce faire, l'unité de commande 15 compare la course L_{incl} du vérin d'inclinaison 9 déterminée à partir du signal de mesure S2 à une première valeur seuil L₁ et à une deuxième valeur seuil L₂. La première valeur seuil L₁ est supérieure à Lₘᵢₙet définit la limite supérieure d'une zone d'approche de la position rétractée du vérin d'inclinaison 9. La deuxième valeur seuil L₂est inférieure à Lₘₐₓ et définit une limite inférieure d'une zone d'approche de la position déployée du vérin d'inclinaison. A titre d'exemple, lesdites zones d'approches peuvent chacune correspondre à une course comprise entre 2 et 15 %, et par exemple de l'ordre de 5 à 10 % de la course totale du vérin d'inclinaison 9, c'est-à-dire Lₘₐₓ- Lₘᵢₙ.

En outre, en réaction à la détection d'une position du vérin d'inclinaison 9 dans l'une des deux zones d'approche précitée, l'unité de commande 15 est configuré pour limiter la vitesse angulaire de déplacement du bras de levage 5. Ceci est avantageux en ce que cela évite des accélération brusques du mouvement du bras de levage 5 lorsque le vérin d'inclinaison 9 atteint l'une de ses positions de butée et que l'alimentation en fluide hydraulique du vérin de levage 6 et du vérin d'inclinaison 11 est assurée par un distributeur à partage de débits 14.

Certains éléments représentés, notamment l'unité de commande 15, peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple C, C++, Java ou VHDL. Cette liste n'est pas exhaustive.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention, telle que définie par les revendications.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Procédé de commande d'une machine de manutention (1) comportant un châssis (2), un bras de levage (5) monté pivotant sur le châssis (2) autour d'au moins un axe X1 entre une position abaissée et une position relevée, un vérin de levage (6) agencé pour faire pivoter le bras de levage (5) autour dudit axe X1 entre la position abaissée et la position relevée, un premier capteur (7) qui est configuré pour délivrer un signal de mesure S1 représentatif d'une position du bras de levage (5) entre la position abaissée et la position relevée, un outil (8) destiné à recevoir une charge et monté pivotant sur le bras de levage (5) autour d'au moins un axe X4, parallèle à X1, un vérin d'inclinaison (9) présentant une course L_{incl} et agencé pour faire pivoter l'outil (8) autour dudit axe X4, un deuxième capteur (10) qui est configuré pour délivrer un signal de mesure S2 relatif à la course L_{incl} du vérin d'inclinaison (9), au moins un organe d'actionnement (16) qui est configuré pour délivrer des demandes Dₗₑᵥ d'actionnement du vérin de levage (6) et des demandes D _{incl} d'actionnement du vérin d'inclinaison (9), le procédé comportant les étapes suivantes :
- recevoir une demande D_{incl} d'actionnement du vérin d'inclinaison (9) ;
- en réponse à la réception d'une demande D_{incl} d'actionnement du vérin d'inclinaison (9), activer un mode d'actionnement manuel du vérin d'inclinaison (9), ledit mode d'actionnement manuel du vérin d'inclinaison (9) comprenant générer une consigne L_{c} relative à la course du vérin d'inclinaison (9) en fonction de ladite demande D_{incl} d'actionnement du vérin d'inclinaison (9) et asservir la course L_{incl} du vérin d'inclinaison (9), en boucle fermée, en fonction de ladite consigne L_{c} relative à la course du vérin d'inclinaison (9) et du signal de mesure S2 relatif à la course L_{incl} du vérin d'inclinaison (9) ;
- recevoir une demande Dₗₑᵥ d'actionnement du vérin de levage (6) ; et
- en réponse à la réception d'une demande d'actionnement du vérin de levage, activer un mode compensation, le mode compensation comportant les étapes de générer une consigne L_{c} relative à la course du vérin d'inclinaison (9) en fonction d'une variation du signal de mesure S1 représentatif de la position Pₗₑᵥ du bras de levage (5) au cours du temps et d'asservir la course L_{incl} du vérin d'inclinaison, en boucle fermée, en fonction de ladite consigne L_{c} relative à la course du vérin d'inclinaison (9) et du signal de mesure S2 relatif à la course L_{incl} du vérin d'inclinaison (9).

2. Procédé de commande selon la revendication 1, dans lequel le mode compensation comporte, pour chaque période T successive, déterminer une variation d'angle Δα correspondant au débattement angulaire du bras de levage (5) autour de l'axe X1 au cours de la période T, en fonction de deux signaux de mesure S1 relatifs à la position Pₗₑᵥ du bras de levage (5) délivrés respectivement au début et à la fin de la période T et dans lequel, lors de la période suivante, la consigne L_{c} relative à la course du vérin d'inclinaison (9) est générée en fonction de la variation d'angle Δα correspondant à la période précédente et la course L_{incl} du vérin d'inclinaison est asservie en fonction de ladite consigne L_{c}.

3. Procédé de commande selon la revendication 1 ou 2, dans lequel le signal de mesure S1 délivré par le premier capteur (7) est relatif à un angle α d'inclinaison du bras de levage (5) par rapport à un axe de référence dans un plan orthogonal à l'axe X1.

4. Procédé de commande selon l'une quelconque des revendications 1 à 3, comportant attribuer à une variable L₀, chaque nouvelle consigne L_{c} relative à la course du vérin d'inclinaison (9) générée et dans lequel, en mode compensation, la consigne L_{c} relative à la course du vérin d'inclinaison (9) est générée en fonction de la variation d'angle Δα et de L₀.

5. Procédé de commande selon la revendication 4, dans lequel, en mode compensation, la consigne L_{c} relative à la course du vérin d'inclinaison (9) est générée en fonction de la variation d'angle Δα et de L₀ de manière à ce qu'une variation d'angle Δβ correspondant au débattement angulaire de l'outil (8) autour de l'axe X4 pour un déplacement de la course du vérin entre L₀ et Lc soit de même valeur et de signe opposé à la variation d'angle Δα.

6. Procédé de commande selon l'une quelconque des revendications 1 à 5, dans lequel la course L_{incl} du vérin d'inclinaison est asservie au moyen d'un contrôleur PID.

7. Procédé de commande selon l'une quelconque des revendications 1 à 6, dans lequel le mode compensation est désactivé en réponse à la réception d'une demande D_{incl} d'actionnement du vérin d'inclinaison (9).

8. Procédé de commande selon l'une quelconque des revendications 1 à 7, dans lequel l'on compare le signal de mesure S2 relatif à la course L_{incl} du vérin d'inclinaison (9) à un longueur seuil Lₘᵢₙ et à une longueur seuil Lₘₐₓ correspondant respectivement à une position complètement rétractée et à une position complètement déployée du vérin d'inclinaison (9) et l'on désactive, le mode compensation, lorsque la course L_{incl} du vérin d'inclinaison (9) est égale à l'une des longueurs seuils Lₘᵢₙ et Lₘₐₓ.

9. Procédé de commande selon la revendication 8, dans lequel l'on génère un signal d'alerte lorsque le mode compensation est désactivé.

10. Procédé de commande selon l'une quelconque des revendications 1 à 9, dans lequel, en mode compensation, l'on compare le signal de mesure S2 relatif à la course L_{incl} du vérin d'inclinaison (9) à un première valeur seuil L₁ et à une deuxième valeur seuil L₂, la première valeur seuil L₁ étant supérieure à une longueur seuil Lₘᵢₙ correspondant à une position complètement rétractée du vérin d'inclinaison (9), la deuxième valeur seuil L₂ étant supérieure à la première valeur seuil L₁ et inférieure à une longueur seuil Lₘₐₓ correspondant à une position complètement déployée du vérin d'inclinaison (9), et dans lequel on limite une vitesse angulaire de pivotement du bras de levage (5) autour de l'axe X4 lorsque la course L_{incl} du vérin d'inclinaison (9) est inférieure à la première valeur seuil L₁ ou supérieure à la deuxième valeur seuil L₂.

11. Machine de manutention (1) comportant un châssis (2), un bras de levage (5) monté pivotant sur le châssis (2) autour d'au moins un axe X1 entre une position abaissée et une position relevée, un vérin de levage (6) agencé pour faire pivoter le bras de levage (5) autour dudit axe X1 entre la position abaissée et la position relevée, un premier capteur qui est configuré pour délivrer un signal de mesure S1 représentatif d'une position du bras de levage (5) entre la position abaissée et la position relevée, un outil (8) destiné à recevoir une charge et monté pivotant sur le bras de levage (5) autour d'au moins un axe X4, parallèle à X1, un vérin d'inclinaison (9) présentant une course L_{incl} et agencé pour faire pivoter l'outil (8) autour dudit axe X4, un deuxième capteur qui est configuré pour délivrer un signal de mesure S2 relatif à la course L_{incl} du vérin d'inclinaison (9), au moins un organe d'actionnement (16) qui est configuré pour délivrer des demandes Dₗₑᵥ d'actionnement du vérin de levage (6) et des demandes D_{incl} d'actionnement du vérin d'inclinaison (9) et
une unité de commande (15) qui est configurée pour :
- recevoir les signaux de mesure S1 et S2, les demande Dₗₑᵥ et les demande D_{incl} ;
- en réponse à la réception d'une demande D_{incl} d'actionnement du vérin d'inclinaison (9), activer un mode d'actionnement manuel du vérin d'inclinaison (9), ledit mode d'actionnement manuel du vérin d'inclinaison (9) comprenant générer une consigne L_{c} relative à la course du vérin d'inclinaison (9) en fonction de ladite demande D_{incl} d'actionnement du vérin d'inclinaison (9) et asservir la course L_{incl} du vérin d'inclinaison (9), en boucle fermée, en fonction de ladite consigne L_{c} relative à la course du vérin d'inclinaison (9) et du signal de mesure S2 relatif à la course L_{incl} du vérin d'inclinaison (9) ; et
- en réponse à la réception d'une demande d'actionnement Dₗₑᵥ du vérin de levage (6), activer un mode compensation, le mode compensation comportant les étapes de générer une consigne L_{c} relative à la course du vérin d'inclinaison (9) en fonction d'une variation du signal de mesure S1 représentatif de la position du bras de levage (5) au cours du temps et d'asservir la course L_{incl} du vérin d'inclinaison, en boucle fermée, en fonction de ladite consigne L_{c} relative à la course du vérin d'inclinaison (9) et du signal de mesure S2 relatif à la course L_{incl} du vérin d'inclinaison (9).

12. Machine de manutention (1) selon la revendication 11, comportant un circuit hydraulique de commande (11) qui est configuré pour assurer la commande du vérin de levage (6) et du vérin d'inclinaison (9) et dans lequel l'unité de commande (15) est configurée pour contrôler le circuit hydraulique de commande (11).

13. Machine de manutention (1) selon la revendication 12, dans laquelle le circuit hydraulique de commande (11) comporte un réservoir (12), une pompe (13) ainsi qu'un distributeur à partage de débits (14) qui est configuré pour mettre en communication sélectivement le fluide hydraulique provenant de la pompe (13) avec le vérin de levage (6) et/ou le vérin d'inclinaison (9).

14. Machine de manutention (1) selon l'une quelconque des revendications 11 à 13, dans laquelle l'unité de commande (15) est configurée de sorte que, en mode compensation :
- pour chaque période T successive, déterminer une variation d'angle Δα correspondant au débattement angulaire du bras de levage (5) autour de l'axe X1 au cours de la période T, en fonction de deux signaux de mesure S1 relatifs à la position Pₗₑᵥ du bras de levage (5) délivrés respectivement au début et à la fin de la période T ; et
- lors de la période suivante, générer la consigne L_{c} relative à la course du vérin d'inclinaison (9) en fonction de la variation d'angle Δα correspondant à la période précédente et asservir la course L_{incl} du vérin d'inclinaison en fonction de ladite consigne L_{c}.

15. Machine de manutention (1) selon la revendication 14, dans laquelle l'unité de commande (15) est configurée pour :
- attribuer à une variable L₀, chaque nouvelle consigne L_{c} relative à la course du vérin d'inclinaison (9) générée et pour
- en mode compensation, générer la consigne L_{c} relative à la course du vérin d'inclinaison (9) en fonction de la variation d'angle Δα et de L₀.

## Patentansprüche

1. Verfahren zum Steuern einer Handhabungsmaschine (1) mit einem Rahmen (2), einem Hubarm (5), der um mindestens eine Achse XI zwischen einer abgesenkten Position und einer angehobenen Position schwenkbar am Rahmen (2) angebracht ist, einem Hubzylinder (6), der so angeordnet ist, dass er den Hubarm (5) um die Achse XI zwischen der abgesenkten Position und der angehobenen Position bewegt, einen ersten Sensor (7), der so konfiguriert ist, dass er ein Messsignal S1 liefert, das eine Position des Hubarms (5) zwischen der abgesenkten Position und der angehobenen Position darstellt, ein Werkzeug (8) bestimmt zum Aufnehmen einer Last und schwenkbar am Hubarm (5) um mindestens eine Achse X4, parallel zu XI, schwenkbar montiert, einen Neigungszylinder (9) mit einem Hub L_{incl}, der so angeordnet ist, dass er das Werkzeug (8) um die Achse X4 schwenkt, einen zweiten Sensor (10), der so konfiguriert ist, dass er ein Messsignal S2 in Bezug auf den Hub L_{incl} des Neigungszylinders (9) liefert, mindestens ein Betätigungselement (16), das so konfiguriert ist, dass es Betätigungsanforderungen Dₗₑᵥ für den Hubzylinder (6) und Betätigungsanforderungen D_{incl} für den Neigungszylinder (9) liefert, wobei das Verfahren die folgenden Schritte umfasst:
- Empfangen einer Anforderung D_{incl} zur Betätigung des Neigungszylinders (9);
- Aktivieren eines manuellen Betätigungsmodus des Neigungszylinders (9) als Reaktion auf den Empfang einer Anforderung D_{incl} zur Betätigung des Neigungszylinders (9), wobei der manuelle Betätigungsmodus des Neigungszylinders (9) umfasst das Erzeugen eines Sollwerts L_{c} für den Hub des Neigungszylinders (9) in Abhängigkeit von der Anforderung D_{incl} zur Betätigung des Neigungszylinders (9) und das Regeln des Hubs L_{incl} des Neigungszylinders (9) in einem geschlossenen Regelkreis entsprechend dem Sollwert L_{c} für den Hub des Neigungszylinders (9) und dem Messsignal S2 für den Hub L_{incl} des Neigungszylinders (9);
- Empfangen einer Anforderung Dₗₑᵥ zur Betätigung des Hubzylinders (6); und
- Aktivieren eines Kompensationsmodus als Reaktion auf den Empfang einer Anforderung zur Betätigung des Hubzylinders, wobei der Kompensationsmodus die Schritte des Erzeugens eines Sollwerts L_{c} für den Hub des Neigungszylinders (9) in Abhängigkeit von einer zeitlichen Änderung des Messsignals S1, das die Position Pₗₑᵥ des Hubarms (5) im Verlauf der Zeit darstellt, und des Steuerns des Hubs L_{incl} des Neigungszylinders in einem geschlossenen Regelkreis in Abhängigkeit von dem genannten Sollwert L_{c} in Bezug auf den Hub des Neigungszylinders (9) und dem Messsignal S2 in Bezug auf den Hub Lind des Neigungszylinders (9) umfasst.

2. Steuerverfahren gemäß Anspruch 1, wobei der Kompensationsmodus umfasst, für jede aufeinanderfolgende Periode T das Bestimmen einer Winkeländerung Δα, die der Winkelauslenkung des Hebearms (5) um die Achse XI während der Periode T entspricht, in Abhängigkeit von zwei Messsignalen S1 bezüglich der Position Pₗₑᵥ des Hebearms (5), die jeweils zu Beginn und am Ende der Periode T ausgegeben werden, und wobei in der folgenden Periode der Sollwert L_{c} für den Hub des Neigungszylinders (9) in Abhängigkeit von der Winkeländerung Δα entsprechend der vorhergehenden Periode erzeugt wird und der Hub L_{incl} des Neigungszylinders in Abhängigkeit von dem genannten Sollwert L_{c} gesteuert wird.

3. Steuerverfahren gemäß Anspruch 1 oder 2, wobei das vom ersten Sensor (7) gelieferte Messsignal S1 sich auf einen Neigungswinkel α des Hubarms (5) in Bezug auf eine Referenzachse in einer zur Achse XI orthogonalen Ebene bezieht.

4. Steuerverfahren gemäß einem der Ansprüche 1 bis 3, umfassend das Zuweisen jedes neuen Sollwerts L_{c} für den Hub des Neigungszylinders (9) zu einer Variablen Lₒ, wobei im Kompensationsmodus der Sollwert L_{c} für den Hub des Neigungszylinders (9) in Abhängigkeit von der Winkeländerung Δα und L₀ erzeugt wird.

5. Steuerverfahren gemäß Anspruch 4, wobei im Kompensationsmodus der Sollwert L_{c} für den Hub des Neigungszylinders (9) in Abhängigkeit von der Winkeländerung Δα und Lₒ so erzeugt wird, dass eine Winkeländerung Δβ, die der Winkelauslenkung des Werkzeugs (8) um die Achse X4 bei einer Verschiebung des Hubs des Zylinders zwischen Lₒ und L_{c} entspricht, den gleichen Wert und das entgegengesetzte Vorzeichen wie die Winkeländerung Δα aufweist.

6. Steuerverfahren gemäß einem der Ansprüche 1 bis 5, wobei der Hub L_{incl} des Neigungszylinders mit Hilfe eines PID-Reglers geregelt wird.

7. Steuerverfahren gemäß einem der Ansprüche 1 bis 6, wobei der Kompensationsmodus als Reaktion auf den Empfang einer Anforderung D_{incl} zum Betätigen des Neigungszylinders (9) deaktiviert wird.

8. Steuerverfahren gemäß einem der Ansprüche 1 bis 7, wobei das Messsignal S2 bezüglich des Hubs L_{incl} des Neigungszylinders (9) mit einer Schwellenlänge Lₘᵢₙ und einer Schwellenlänge Lₘₐₓ verglichen wird, die jeweils einer vollständig eingefahrenen Position und einer vollständig ausgefahrenen Position des Neigungszylinders (9) entsprechen, und der Kompensationsmodus deaktiviert wird, wenn der Hub L_{incl} des Neigungszylinders (9) einer der Schwellenlängen Lₘᵢₙ und Lₘₐₓ entspricht.

9. Steuerverfahren gemäß Anspruch 8, wobei ein Warnsignal erzeugt wird, wenn der Kompensationsmodus deaktiviert ist.

10. Steuerverfahren gemäß einem der Ansprüche 1 bis 9, wobei im Kompensationsmodus das Messsignal S2 bezüglich des Hubs L_{incl} des Neigungszylinders (9) mit einem ersten Schwellenwert L₁ und einem zweiten Schwellenwert L₂ verglichen wird, wobei der erste Schwellenwert L₁ größer ist als eine Schwellenlänge Lₘᵢₙ, die einer vollständig eingefahrenen Position des Neigungszylinders (9) entspricht, wobei der zweite Schwellenwert L₂ größer ist als der erste Schwellenwert L₁ und kleiner als eine Schwellenlänge Lₘₐₓ, die einer vollständig ausgefahrenen Position des Neigungszylinders (9) entspricht, und wobei eine Schwenkwinkelgeschwindigkeit des Hubarms (5) um die Achse X4 begrenzt wird, wenn der Hub L_{incl} des Neigungszylinders (9) kleiner als der erste Schwellenwert L₁ oder größer als der zweite Schwellenwert L₂ ist.

11. Handhabungsmaschine (1), umfassend einen Rahmen (2), einen am Rahmen (2) um mindestens eine Achse XI zwischen einer abgesenkten Position und einer angehobenen Position schwenkbar gelagerten Hubarm (5), einen Hubzylinder (6), der angeordnet ist, um den Hubarm (5) um die Achse XI zwischen der abgesenkten Position und der angehobenen Position zu schwenken, einen ersten Sensor, der so konfiguriert ist, dass er ein Messsignal S1 liefert, das eine Position des Hubarms (5) zwischen der abgesenkten Position und der angehobenen Position darstellt, ein Werkzeug (8), das zur Aufnahme einer Last bestimmt ist und um mindestens eine Achse X4, die parallel zu XI ist, schwenkbar am Hubarm (5) angebracht ist, ein Neigungszylinder (9) mit einem Hub L_{incl}, der so angeordnet ist, dass er das Werkzeug (8) um die Achse X4 schwenkt, einen zweiten Sensor, der so konfiguriert ist, dass er ein Messsignal S2 liefert, das sich auf den Hub L_{incl} des Neigungszylinders (9) bezieht, mindestens ein Betätigungselement (16), das so konfiguriert ist, dass es Betätigungsanforderungen Dₗₑᵥ für den Hubzylinder (6) und Betätigungsanforderungen D_{incl} für den Neigungszylinder (9) ausgibt, und
eine Steuereinheit (15), die konfiguriert ist, um:
- die Messsignale S1 und S2, die Anforderungen Dₗₑᵥ und die Anforderungen D_{incl} zu empfangen;
- als Reaktion auf den Empfang einer Anforderung D_{incl} zur Betätigung des Neigungszylinders (9) einen manuellen Betätigungsmodus des Neigungszylinders (9) zu aktivieren, wobei der manuelle Betätigungsmodus des Neigungszylinders (9) das Erzeugen eines Sollwerts L_{c} für den Hub des Neigungszylinders (9) in Abhängigkeit von der Anforderung D_{incl} zur Betätigung des Neigungszylinders (9) und das Regeln des Hubs L_{incl} des Neigungszylinders (9) in einem geschlossenen Regelkreis in Abhängigkeit von dem Sollwert L_{c} für den Hub des Neigungszylinders (9) und dem Messsignal S2 für den Hub L_{incl} des Neigungszylinders (9,) umfasst; und
- als Reaktion auf den Empfang einer Anforderung zur Betätigung Dₗₑᵥ des Hubzylinders (6) einen Ausgleichsmodus zu aktivieren, wobei der Ausgleichsmodus die Schritte des Erzeugens eines Sollwerts L_{c} für den Hub des Neigungszylinders (9) in Abhängigkeit von einer Änderung des Messsignals S1, das die Position des Hubarms im Laufe der Zeit repräsentiert, und des Steuerns des Hub L_{incl} des Neigungszylinders in einem geschlossenen Regelkreis in Abhängigkeit von dem genannten Sollwert L_{c} in Bezug auf den Hub des Neigungszylinders (9) und dem Messsignal S2 in Bezug auf den Hub L_{incl} des Neigungszylinders (9), umfasst.

12. Handhabungsmaschine (1) gemäß Anspruch 11, die einen hydraulischen Steuerkreis (11) umfasst, der zur Sicherstellung der Steuerung des Hubzylinders (6) und des Neigungszylinders (9) konfiguriert ist, wobei die Steuereinheit (15) zur Steuerung des hydraulischen Steuerkreises (11) konfiguriert ist.

13. Handhabungsmaschine (1) gemäß Anspruch 12, wobei der hydraulische Steuerkreis (11) einen Behälter (12), eine Pumpe (13) sowie ein Durchflussverteilungsventil (14) , das so konfiguriert ist, dass es die von der Pumpe (13) kommende Hydraulikflüssigkeit selektiv mit dem Hubzylinder (6) und/oder dem Neigungszylinder (9) verbindet, umfasst.

14. Handhabungsmaschine (1) gemäß einem der Ansprüche 11 bis 13, wobei die Steuereinheit (15) so konfiguriert ist, dass im Kompensationsmodus:
- für jede aufeinanderfolgende Periode T eine Winkeländerung Δα bestimmbar ist, die der Winkelauslenkung des Hubarms (5) um die Achse XI während der Periode T entspricht, basierend auf zwei Messsignalen S1 bezüglich der Position Pₗₑᵥ des Hubarms (5), die jeweils zu Beginn und am Ende der Periode T ausgegeben werden; und
- in der folgenden Periode der Sollwert L_{c} in Bezug auf den Hub des Neigungszylinders (9) in Abhängigkeit von der Winkeländerung Δα, die der vorhergehenden Periode entspricht, erzeugbar ist und der Hub L_{incl} des Neigungszylinders in Abhängigkeit von dem genannten Sollwert L_{c} regelbar ist.

15. Handhabungsmaschine (1) gemäß Anspruch 14, wobei die Steuereinheit (15) konfiguriert ist, um:
- einer Variablen Lₒ jeden neuen Sollwert L_{c} zuzuweisem, der sich auf den erzeugten Hub des Neigungszylinders (9) bezieht, und
- im Kompensationsmodus den Sollwert L_{c} für den Hub des Neigungszylinders (9) in Abhängigkeit von der Winkeländerung Δα und Lₒ zu erzeugen.

## Claims

1. A method for controlling a handling machine (1) comprising a chassis (2), a lifting arm (5) mounted pivotingly on the chassis (2) about at least one axis X1 between a lowered position and a raised position, a lifting ram (6) arranged to pivot the lifting arm (5) about said axis X1 between the lowered position and the raised position, a first sensor (7) that is configured to deliver a measurement signal S1 representing a position of the lifting arm (5) between the lowered position and the raised position, a tool (8) intended to receive a load and mounted pivotingly on the lifting arm (5) about at least one axis X4 parallel to X1, a tilt ram (9) that has a travel L_{incl} and is arranged to pivot the tool (8) about said axis X4, a second sensor (10) that is configured to deliver a measurement signal S2 relating to the travel L_{incl} of the tilt ram (9), at least one actuator (16) that is configured to deliver requests Dₗₑᵥ to actuate the lifting ram (6) and requests D_{incl} to actuate the tilt ram (9), the method including the following steps:
- receiving a request D_{incl} to actuate the tilt ram (9),
- in response to receipt of a request D_{incl} to actuate the tilt ram (9), activating a manual actuation mode of the tilt ram (9), said manual actuation mode of the tilt ram (9) comprising generating a setpoint L_{c} relating to the travel of the tilt ram (9) as a function of said request D_{incl} to actuate the tilt ram (9) and providing closed-loop control of the travel L_{incl} of the tilt ram (9) as a function of said setpoint L_{c} relating to the travel of the tilt ram (9) and of the measurement signal S2 relating to the travel L_{incl} of the tilt ram (9),
- receiving a request Dₗₑᵥ to actuate the lifting ram (6), and
- in response to receipt of a request to actuate the lifting ram, activating a compensation mode, the compensation mode including the steps of generating a setpoint L_{c} relating to the travel of the tilt ram (9) as a function of a variation in the measurement signal S1 representing the position Pₗₑᵥ of the lifting arm (5) over time and providing closed-loop control of the travel L_{incl} of the tilt ram as a function of said setpoint L_{c} relating to the travel of the tilt ram (9) and of the measurement signal S2 relating to the travel L_{incl} of the tilt ram (9).

2. The control method as claimed in claim 1, wherein the compensation mode involves, for each successive period T, determining an angular variation Δα corresponding to the angular displacement of the lifting arm (5) about the axis X1 during the period T, as a function of two measurement signals S1 relating to the position Pₗₑᵥ of the lifting arm (5) that are delivered respectively at the beginning and at the end of the period T, and wherein, during the following period, the setpoint L_{c} relating to the travel of the tilt ram (9) is generated as a function of the angular variation Δα corresponding to the preceding period and the travel L_{incl} of the tilt ram is closed-loop controlled as a function of said setpoint L_{c}.

3. The control method as claimed in claim 1 or 2, wherein the measurement signal S1 delivered by the first sensor (7) relates to a tilt angle α of the lifting arm (5) in relation to a reference axis in a plane orthogonal to the axis X1.

4. The control method as claimed in any one of claims 1 to 3, including attributing each new generated setpoint L_{c} relating to the travel of the tilt ram (9) to a variable L₀ and wherein, in compensation mode, the setpoint L_{c} relating to the travel of the tilt ram (9) is generated as a function of the angular variation Δα and of L₀.

5. The control method as claimed in claim 4, wherein, in compensation mode, the setpoint L_{c} relating to the travel of the tilt ram (9) is generated as a function of the angular variation Δα and of L₀ so that an angular variation Δβ corresponding to the angular displacement of the tool (8) about the axis X4 for a change in the travel of the ram between L₀ and Lc has the same value as and the opposite sign to the angular variation Δα.

6. The control method as claimed in any one of claims 1 to 5, wherein the travel L_{incl} of the tilt ram is closed-loop controlled by a PID controller.

7. The control method as claimed in any one of claims 1 to 6, wherein the compensation mode is deactivated in response to receipt of a request D_{incl} to actuate the tilt ram (9).

8. The control method as claimed in any one of claims 1 to 7, wherein the measurement signal S2 relating to the travel L_{incl} of the tilt ram (9) is compared to a threshold length Lₘᵢₙ and to a threshold length Lₘₐₓ corresponding respectively to a fully retracted position and to a fully deployed position of the tilt ram (9), and the compensation mode is deactivated if the travel L_{incl} of the tilt ram (9) is equal to one of the threshold lengths Lₘᵢₙ and Lₘₐₓ.

9. The control method as claimed in claim 8, wherein a warning signal is generated if the compensation mode is deactivated.

10. The control method as claimed in any one of claims 1 to 9, wherein, in compensation mode, the measurement signal S2 relating to the travel L_{incl} of the tilt ram (9) is compared to a first threshold value L₁ and to a second threshold value L₂, the first threshold value L₁ being greater than a threshold length Lₘᵢₙ corresponding to a fully retracted position of the tilt ram (9), the second threshold value L₂ being greater than the first threshold value L₁ and less than a threshold length Lₘₐₓ corresponding to a fully deployed position of the tilt ram (9), and wherein an angular pivot speed of the lifting arm (5) about the axis X4 is limited if the travel L_{incl} of the tilt ram (9) is less than the first threshold value L₁ or greater than the second threshold value L₂.

11. A handling machine (1) comprising a chassis (2), a lifting arm (5) mounted pivotingly on the chassis (2) about at least one axis X1 between a lowered position and a raised position, a lifting ram (6) arranged to pivot the lifting arm (5) about said axis X1 between the lowered position and the raised position, a first sensor that is configured to deliver a measurement signal S1 representing a position of the lifting arm (5) between the lowered position and the raised position, a tool (8) intended to receive a load and mounted pivotingly on the lifting arm (5) about at least one axis X4 parallel to X1, a tilt ram (9) that has a travel L_{incl} and is arranged to pivot the tool (8) about said axis X4, a second sensor that is configured to deliver a measurement signal S2 relating to the travel L_{incl} of the tilt ram (9), at least one actuator (16) that is configured to deliver requests Dₗₑᵥ to actuate the lifting ram (6) and requests D_{incl} to actuate the tilt ram (9), and
a control unit (15) that is configured to:
- receive the measurement signals S1 and S2, the requests Dₗₑᵥ and the requests D_{incl},
- in response to receipt of a request D_{incl} to actuate the tilt ram (9), activate a manual actuation mode of the tilt ram (9), said manual actuation mode of the tilt ram (9) comprising generating a setpoint L_{c} relating to the travel of the tilt ram (9) as a function of said request D_{incl} to actuate the tilt ram (9) and providing closed-loop control of the travel L_{incl} of the tilt ram (9) as a function of said setpoint L_{c} relating to the travel of the tilt ram (9) and of the measurement signal S2 relating to the travel L_{incl} of the tilt ram (9), and
- in response to receipt of a request Dₗₑᵥ to actuate the lifting ram (6), activate a compensation mode, the compensation mode including the steps of generating a setpoint L_{c} relating to the travel of the tilt ram (9) as a function of a variation in the measurement signal S1 representing the position of the lifting arm (5) over time and providing closed-loop control of the travel L_{incl} of the tilt ram as a function of said setpoint L_{c} relating to the travel of the tilt ram (9) and of the measurement signal S2 relating to the travel L_{incl} of the tilt ram (9).

12. The handling machine (1) as claimed in claim 11, including a hydraulic control circuit (11) that is configured to control the lifting ram (6) and the tilt ram (9), and wherein the control unit (15) is configured to control the hydraulic control circuit (11).

13. The handling machine (1) as claimed in claim 12, wherein the hydraulic control circuit (11) includes a tank (12), a pump (13) and a flow distributor (14) that is configured to bring the hydraulic fluid from the pump (13) into communication selectively with the lifting ram (6) and/or the tilt ram (9).

14. The handling machine (1) as claimed in any one of claims 11 to 13, wherein the control unit (15) is configured such that, in compensation mode:
- for each successive period T, determine an angular variation Δα corresponding to the angular displacement of the lifting arm (5) about the axis X1 during the period T, as a function of two measurement signals S1 relating to the position Pₗₑᵥ of the lifting arm (5) that are delivered respectively at the beginning and at the end of the period T, and
- during the following period, generate the setpoint L_{c} relating to the travel of the tilt ram (9) as a function of the angular variation Δα corresponding to the preceding period and controlling the travel L_{incl} of the tilt ram as a function of said setpoint L_{c}.

15. The handling machine (1) as claimed in claim 14, wherein the control unit (15) is configured to:
- attribute each new generated setpoint L_{c} relating to the travel of the tilt ram (9) to a variable L₀ and to
- in compensation mode, generate the setpoint L_{c} relating to the travel of the tilt ram (9) as a function of the angular
